# EUROPÄISCHE PATENTSCHRIFT

(11) **EP 0 436 798 B1**
(45) Veröffentlichungstag und Bekanntmachung des Hinweises auf die Patenterteilung: **15.09.1993**
(21) Anmeldenummer: 90121534.3
(22) Anmeldetag: 10.11.1990
(51) Int. Cl.: B60H 1/00

(54) **Deckenkanalanordnung in einem Omnibus**
Channel arrangement in the roof of a bus
Arrangement de canalisation de toit dans un autobus

(30) Priorität: 12.01.1990 DE 4000732
(43) Veröffentlichungstag der Anmeldung: 17.07.1991
(73) Patentinhaber: MERCEDES-BENZ AG, 70327 Stuttgart (DE)
(72) Erfinder: Schanzer, Hans-Peter, Dipl.-Ing., W-7120 Bietigheim-Bissingen (DE); Kalt, Hans-Peter, Dipl.-Ing., W-7036 Schönaich (DE); Marold, Adolf, Dipl.-Ing., W-7030 Böblingen 4 (DE); Schmid, Wolfgang, Dipl.-Ing., W-7044 Ehningen (DE)

(56) Entgegenhaltungen:
- EP-A- 0 014 777
- WO-A-88/04240
- GB-A- 2 182 134

## Beschreibung

Die Erfindung betrifft eine Deckenkanalanordnung in einem Omnibus gemäß dem Oberbegriff des Patentanspruches 1.

Eine derartige Deckenkanalanordnung ist aus der GB-A-2 182 134 bekannt. Dem ersten, fensterreihennahen Kanal wird Frischluft zugeführt, die durch einen am Luftauslaß zu den Seitenscheiben angeordneten Wärmetauscher temperierbar ist. Eine Aufheizung der nach dem Öffnen mindestens eines Verschlußorganes in den zweiten Kanal überströmenden und aus diesem ausströmenden Luft ist nicht möglich, so daß die saisonale Verwendbarkeit einer derartigen Einrichtung stark eingeschränkt ist.

Aus dem DE-U- 71 41 863 ist eine Deckenkanalanordnung bekannt, bei der der erste Kanal der Luftabfuhr und der zweite Kanal der Luftzufuhr dient. Der mit zentral plazierten und von den Fahrgästen deshalb bequem erreichbaren Luftauslaßdüsen versehene zweite Kanal ist äußerst voluminös und schränkt die dachseitigen Unterbringungsmöglichkeiten für Handgepäck stark ein. Dies gilt um so mehr, wenn sich an den zweiten Kanal ein zur Fahrzeugmitte hin gerichteter Kanalabschnitt anschließt, der die Luftversorgung des Mittelgangbereiches des Omnibusses übernimmt. Nachteilig ist auch, daß keine direkte Luftbeaufschlagung der Scheiben möglich ist und deshalb die Gefahr des Beschlagens derselben gegeben ist.

Es ist Aufgabe der Erfindung, unter Beibehaltung einer bedienfreundlichen Anordnung der den Passagieren zugeordneten Luftdüsen eine intensiv nutzbare Kanalausbildung zu schaffen, die ein Höchstmaß an Komfort und eine raumsparende Anordnung einer Gepäckgalerie ermöglicht, wobei selbst bei belegter Gepäckgalerie eine ungestörte Luftzufuhr zum Mittelgangbereich gegeben sein soll, so daß sich insgesamt eine doppelwalzenförmige und damit intensive Raumdurchlüftung mit bodenseitiger Luftabsaugung ausbildet.

Diese Aufgabe wird bei einer Deckenkanalanordnung gemäß dem Oberbegriff des Patentanspruches 1 durch dessen kennzeichnende Merkmale gelöst.

Ist die Gepäckgalerie durch Klappen verschließbar, so kann der Griffteil jeder Klappe eine Luftaustrittsöffnung aufweisen, wobei zuvor ein freier Luftübergang von der Vorderseite der Gepäckgalerie zur griffseitigen Austrittsöffnung mit Richtcharakteristik erfolgt.

In weiterer Ausgestaltung der Erfindung können zur intensiven Nutzung vom zweiten Kanal Versorgungsleitungen aufgenommen werden, die zu unterseitig in ihm eingelassene Ausrüstungsteile wie Schalter, Beleuchtungskörper und Lautsprecher führen.

Zweckmäßig ist es, wenn Luftauslaßdüse und Ausrüstungsteile von einer gemeinsamen Grundplatte aufgenommen werden und wenn diese in den zweiten Kanal einklipsbar ist.

Der Gegenstand der Erfindung wird nachfolgend anhand eines in der Zeichnung dargestellten Ausführungsbeispiels näher erläutert. Es zeigt:
- Fig. 1: die beidseitige Luftführung bei einem vereinfacht wiedergegebenen Omnibus und
- Fig. 2: die rechtsseitige Kanalanordnung in einer genaueren und größer gehaltenen Darstellung.

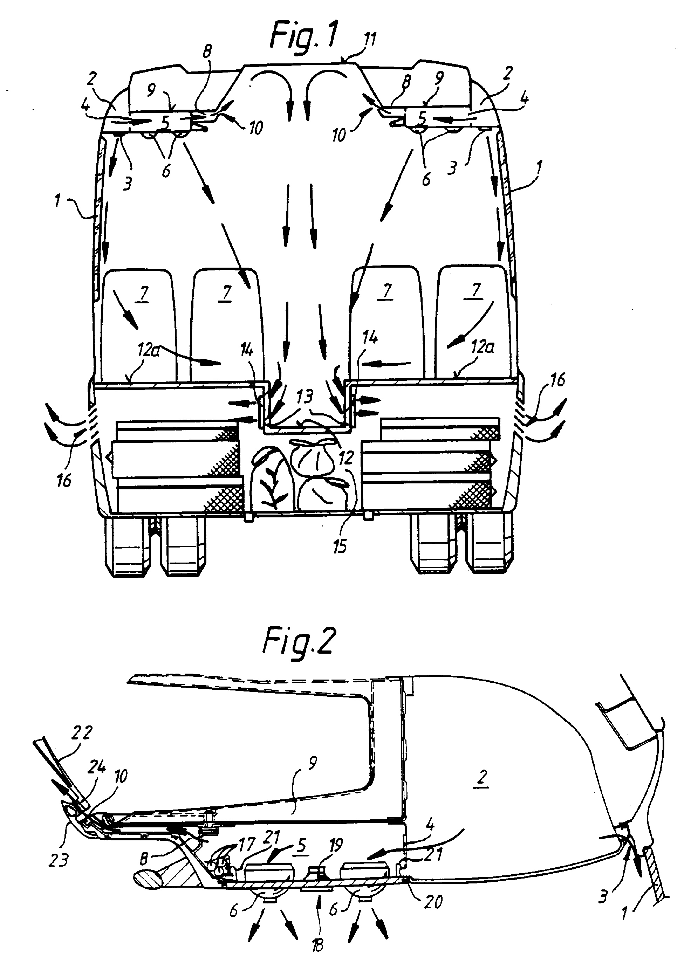

Die der Fig. 1 entnehmbare spiegelbildliche Kanalanordnung besteht jeweils aus einem den Seitenscheiben 1 nahen ersten, in Fahrzeuglängsrichtung verlaufenden Kanal 2, der Auslässe 3 aufweist, durch die die gegebenenfalls durch nicht dargestellte Wärmetauscher aufgeheizte oder gekühlte Luft der Seitenscheiben 1 zur Beschlagfreiheit zugeführt wird. Der Kanal 2 ist weiterhin mit Luftübertrittsmöglichkeiten 4 versehen, durch die die Luft in einen sich an den ersten Kanal 2 anschließenden zweiten Kanal 5 mit relativ geringer Höhe übertritt.

Unterseitig des zweiten Kanals 5 sind vorzugsweise mengen- und richtungseinstellbare Luftauslaßdüsen 6 angeordnet, die der gezielten Beschlagung von auf den Fahrgastsitzen 7 sitzenden, nicht dargestellten Passagieren dienen. An den zweiten Kanal 5 schließt sich ein Kanalabschnitt 8 an, der vorderseitig einer über den Kanal 5 sich erstreckenden Gepäckgalerie 9 in Luftaustrittsdüsen 10 endet, durch die die austretende Luft zur Fahrzeugdecke 11 hin abströmt. Dort stößt die Luft auf die aus den gegenüberliegenden Luftaustrittsdüsen 10 austretende Luft und wird - wie durch Pfeile angedeutet - unter Ausbildung einer doppelwalzenförmigen Strömung zu einem Mittelgang 12 hin umgelenkt. In den vom Mittelgang 12 nach oben abragenden und einen die Bestuhlung aufnehmenden Podestboden 12a tragenden Wänden 13 sind Lufteinlässe 14 zum Kofferraum 15 hin eingelassen. Durch die Lufteinlässe 14 strömt auch die den Auslässen 3 und den Luftauslaßdüsen 6 entstammende, nach unten geführte Luft, so daß letztendlich die gesamte Luftrate durch den Kofferraum 15 zu Luftauslässen 16 gelangt, die in nicht dargestellten, den Kofferraum 15 zugänglich machenden Klappen eingelassen sein können.

Wie aus Fig. 2 hervorgeht, durchziehen den zweiten Kanal 5 Versorgungsleitungen 17, die in nicht dargestellter Weise zu Ausrüstungsteilen 18 führen, die aus Beleuchtungskörpern 19 bestehen können, von denen nur einer dargestellt ist. Als weitere Ausrüstungsteile können z.B. auch Schalter und Lautsprecher vorgesehen werden. Die Ausrüstungsteile 18 werden von einer auch die Luftauslaßdüsen 6 beherbergenden Grundplatte 20 aufgenommen, die ihrerseits über Klipse 21 im zweiten Kanal 5 gehalten werden.

Die Gepäckgalerie 9 ist durch Klappen 22, von denen nur eine angedeutet ist, verschlossen und ein jeder Klappe 22 zugeordnetes Griffteil 23 weist eine düsenförmige Luftaustrittsöffnung 24 auf, die unter freiem Luftübertritt von der Luftaustrittsdüse 10 beaufschlagt wird.

## Patentansprüche

1. Deckenkanalanordnung in einem Omnibus, jeweils bestehend aus einem ersten fensterreihennahen Kanal (2) und einem sich an diesen anschließenden zweiten, mehr zur Fahrzeugmitte gerückten und unterseitig mit dem ersten Kanal (2) fluchtenden Kanal (5), der an seiner Unterseite mit den Fahrgastsitzen (7) zugekehrten, einstellbaren Luftauslaßdüsen (6) ausgerüstet ist und zumindest bereichsweise angesetzte Kanalabschnitte mit zur Fahrzeugmitte hin ausblasenden Luftaustrittsdüsen (10) aufweist, wobei den ersten Kanal (2) bedarfsweise temperierte Luft verläßt und wobei dieser mit schlitzförmigen, die austretende Luft zu den Seitenscheiben (1) leitenden Auslässen (3) sowie mit Luftaustrittsmöglichkeiten (4) zum zweiten Kanal (5) versehen ist,
**dadurch gekennzeichnet**,
daß der zweite Kanal (5) gegenüber dem ersten Kanal (2), dem bedarfsweise bereits temperierte Luft zuführbar ist, reduziert ist, und daß die der Fahrzeugmitte zugeordneten Luftaustrittsdüsen (10) im Bereich der Vorderseite einer sich oberhalb des zweiten Kanals (5) erstreckenden Gepäckgalerie (9) angeordnet sind, wodurch die austretende Luft zur Fahrzeugdecke (11) hin abströmt.

2. Deckenkanalanordnung nach Anspruch 1,
**dadurch gekennzeichnet,**
daß die Gepäckgalerie (9) durch Klappen (22) verschlossen ist und der Griffteil (23) jeder Klappe (22) eine Luftaustrittsöffnung (24) aufweist.

3. Deckenkanalanordnung nach Anspruch 1 oder 2,
**dadurch gekennzeichnet,**
daß vom zweiten Kanal (5) Versorgungsleitungen (17) aufgenommen werden, die zu unterseitig in ihn eingelassene Ausrüstungsteile (18) wie Schalter, Beleuchtungskörper und Lautsprecher führen.

4. Deckenkanalanordnung nach Anspruch 3,
**dadurch gekennzeichnet,**
daß die Luftauslaßdüsen (6) und die Ausrüstungsteile (18) von einer gemeinsamen Grundplatte (20) aufgenommen werden und diese in den zweiten Kanal (5) einklipsbar ist.

## Claims

1. Roof channel arrangement in an omnibus, respectively consisting in a first channel (2) close to the window line and in a second channel (5) connecting with it, set back more towards the centre of the vehicle and in alignment on the first channel (2) under it, equipped on its underside with adjustable air outlet nozzles (6) facing the passenger seats (7), and at least regionally provided with channel portions with air outlet nozzles (10) blowing air towards the centre of the vehicle, conditioned air leaving the first channel (2) as required, said first channel being provided with slit-shaped outlets (3) guiding the outflowing air towards the side windows (1) as well as with air outflow possibilities (4) to the second channel (5),
characterized in that the second channel (5) is reduced opposite the first channel (2) to which already conditioned air can already be directed if required, and in that the air outlet nozzles (10) associated with the centre of the vehicle are mounted in the area of the front side of a luggage rack (9) extending above the second channel (5), by means of which the outflowing air flows towards the roof (11) of the vehicle.

2. Roof channel arrangement according to claim 1, characterized in that the luggage rack (9) is closed by means of flaps (22) and the handle (23) of each flap (22) has an air outflow opening (24).

3. Roof channel arrangement according to either claim 1 or 2, characterized in that from the second channel (5) supply ducts (17) are taken which lead to items of equipment (18) such as switches, lights and loudspeakers inserted into them from below.

4. Roof channel arrangement according to claim 3, characterized in that the air outlet nozzles (6) and the items of equipment (18) are taken from a common baseplate (20) which can be clipped into the second channel (5).

## Revendications

1. Dispositif à canaux de toit dans un autobus, constitué respectivement par un premier canal (2) proche de la rangée de vitres, et un second canal (5) qui est raccordé au précédent, est plus en retrait en direction du centre du véhicule, est aligné, au niveau de son côté inférieur, avec le premier canal (2), est équipé, sur son côté inférieur, de buses réglables de sortie d'air (6) tournées vers les sièges (7) des passagers et possède des sections rapportées au moins par endroits et comportant des buses de sortie d'air (10) qui réalisent un soufflage en direction du centre du véhicule, de l'air éventuellement mis en température quittant le premier canal (2) et ce canal comportant des sorties (3) en forme de fentes, qui dirigent l'air sortant en direction des vitres latérales (1), et comportant des possibilités (4) de sortie de l'air en direction du second canal (5),
caractérisé en ce que le second canal (5) a une taille réduite par rapport au premier canal (2), auquel peut être envoyé de l'air éventuellement déjà mis en température, et que les buses de sortie d'air (10), qui sont associées au centre du véhicule, sont disposées au niveau du côté avant d'une galerie porte-bagages (9) qui s'étend au-dessus du second canal (5), ce qui a pour effet que l'air sortant est évacué en direction du plafond (11) du véhicule.

2. Dispositif à canaux de toit selon la revendication 1, caractérisé en ce que la galerie porte-bagages (9) est fermée par des volets (22) et que l'élément de préhension (23) de chaque volet (22) possède une ouverture (24) de sortie de l'air.

3. Dispositif à canaux de toit selon la revendication 1 ou 2, caractérisé en ce que le second canal (5) loge des lignes d'alimentation (17) qui aboutissent à des éléments d'équipement (18) insérés dans ce canal, à partir de sa face inférieure, tels que des interrupteurs, des unités d'éclairage et des hauts-parleurs.

4. Dispositif à canaux de toit selon la revendication 3, caractérisé en ce que les buses de sortie d'air (6) et les éléments d'équipement (18) sont disposés dans une plaque de base commune (20) et que cette dernière peut être fixée par encliquetage dans le second canal (5).
